# EUROPEAN PATENT SPECIFICATION

(11) **EP 1 688 206 B1**
(45) Date of publication and mention of the grant of the patent: **05.08.2009**
(21) Application number: 05255306.2
(22) Date of filing: 30.08.2005
(51) Int. Cl.: B23K 20/12, B23K 101/04

(54) **Friction stir welding method with prior welding of a buildup bead by using a buildup member**
Reibrührschweissverfahren mit einer unter Verwendung eines Auftragelementes hergestellten vorschweissenden Naht
Méthode de soudage par friction agitation avec dépose d'un pré cordon de chargement à l'aide d'un élément de rechargement

(30) Priority: 01.02.2005 JP 2005024696
(43) Date of publication of application: 09.08.2006
(73) Proprietor: HITACHI, LTD., Chiyoda-ku Tokyo 100-8280 (JP)
(72) Inventor: Ezumi, Masakuni c/o Hitachi, Ltd., Chiyoda-ku, Tokyo 100-8220 (JP); Okada, Norihisa c/o Hitachi, Ltd., Chiyoda-ku, Tokyo 100-8220 (JP)
(74) Representative: Paget, Hugh Charles Edward

(56) References cited:
- EP-A- 0 474 455
- US-A- 6 045 028
- US-A1- 2002 092 888
- US-A1- 2003 000 997
- PATENT ABSTRACTS OF JAPAN vol. 1999, no. 04, 30 April 1999 (1999-04-30) -& JP 11 010368 A (SHOWA ALUM CORP), 19 January 1999 (1999-01-19)
- PATENT ABSTRACTS OF JAPAN vol. 2003, no. 07, 3 July 2003 (2003-07-03) -& JP 2003 062680 A (HITACHI KASADO KIKAI CO LTD), 5 March 2003 (2003-03-05) -& EP 1 287 940 B (HITACHI, LTD) 7 September 2005 (2005-09-07)
- PATENT ABSTRACTS OF JAPAN vol. 2000, no. 22, 9 March 2001 (2001-03-09) -& JP 2001 138070 A (HITACHI LTD), 22 May 2001 (2001-05-22)
- PATENT ABSTRACTS OF JAPAN vol. 2000, no. 07, 29 September 2000 (2000-09-29) -& JP 2000 094156 A (SHOWA ALUM CORP), 4 April 2000 (2000-04-04)

## Description

The present invention relates to a friction stir welding method for welding two members. More specifically, it relates to a friction stir welding method for welding two members butted against each other.

### Description of the related art

A friction stir welding method is disclosed in Japanese Patent No. 03014654 (USP 06581819) (patent document 1). As disclosed in patent document 1, a friction stir welding method relates to inserting a rotary tool to a butted portion between two members, rotating the rotary tool to soften the members and to perform solid-phase welding of the members.

In general, a friction stir welding method is performed by butting together panel members having the same thickness and welding the butted portion thereof.

Furthermore, as shown in patent document 1, it is not possible to obtain a good joint if a space exists at the butted portion between the two members, so extruded shape members having projections formed to the butted portions are butted against one another, and friction stir welding is performed so that the metal material constituting the projection is filled in the space formed at the butted portion. After performing friction stir welding, the unnecessary projection is cut and removed.

Upon performing friction stir welding of two members having different thicknesses, as illustrated in FIG. 4 of Japanese Patent Application Laid-Open Publication No. 2003-062680 (USP06779705) (patent document 2), the members are butted against each other, and deposit welding is performed to the surface of the member having a smaller thickness before the members are subjected to friction stir welding. Thereafter, if necessary, the unnecessary portion is cut and removed.

However, in this case, since deposit welding is performed manually, it requires much work. Further, black marks are adhered to the surface of the members during the welding process, which deteriorates the appearance, and the weld heat may deform the panel (members).

Moreover, as disclosed in patent document 2, the member having a greater panel thickness may have a protruded block at the butted portion for receiving the thinner member. In this arrangement, a defect is likely to occur in the friction stir weld bead. It is possible to form a friction stir weld joint eliminating such defects, but since the conditional range of such friction stir welding is narrow, it is extremely difficult to perform such welding.

In this case, the thinner panel is positioned to overlap with the protruded block on the thicker panel, but if there is a space formed between the upper surface of the protruded block and the lower surface of the thinner panel, a defect is likely to occur in the friction stir weld bead. In order to prevent the occurrence of defects, it is important to have the upper surface of the panel having the protruded block contact the lower surface of the panel being placed thereon (the thinner panel) so that no space is formed therebetween.

US 2002/0092888 describes a friction stir welding method according to the first part of claim 1. In one embodiment, two members are butted together and arc-welding is performed along the joint line, forming a lifted nugget. Next, friction stir welding is performed by positioning the lower end of the large-diameter portion of a rotary tool within the lifted nugget.

### SUMMARY OF THE INVENTION

The first object of the present invention is to provide a good friction stir weld joint upon welding a butted portion between two members.

Further, the second object of the present invention is to create a good friction stir weld joint upon welding a butted portion between two members having different thicknesses.

The first object of the present invention is achieved as set out in claim 1.

In this description, the terms "thin panel" and "thickpanel" refer to the state in which the panels at the butted portion have upper surfaces positioned at different heights. The panel having its upper surface positioned higher is called the thick panel, and the panel having is upper surface positioned lower is called the thin panel. Further, the term "panel" includes an extruded shape member.

### BRIEF DESCRIPTION OF THE DRAWINGS

FIG. 1 is a perspective view of embodiment 1 of the present invention in which a buildup bead is welded;
FIG. 2 is an A-A cross-section of FIG. 1;
FIG. 3 is a B-B cross-section of FIG. 1;
FIG. 4 is a drawing of an embodiment of the present invention as defined in claims, in which friction stir welding is performed on the buildup bead;
FIG. 5 is a C-C cross-section of FIG. 4;
FIG. 6 is a D-D cross-section of FIG. 4;
FIG. 7 is a cross-sectional view of an example not covered by the present invention as defined in the claims. in which the steps for friction stir welding are illustrated; and
FIG. 8 is a vertical cross-sectional view of an example not covered by the present invention as defined in the claims..

### DETAILED DESCRIPTION OF THE PREFERRED EMBODIMENTS

Now, the preferred embodiments for carrying out the present invention will be described.

### [Embodiment of the present invention]

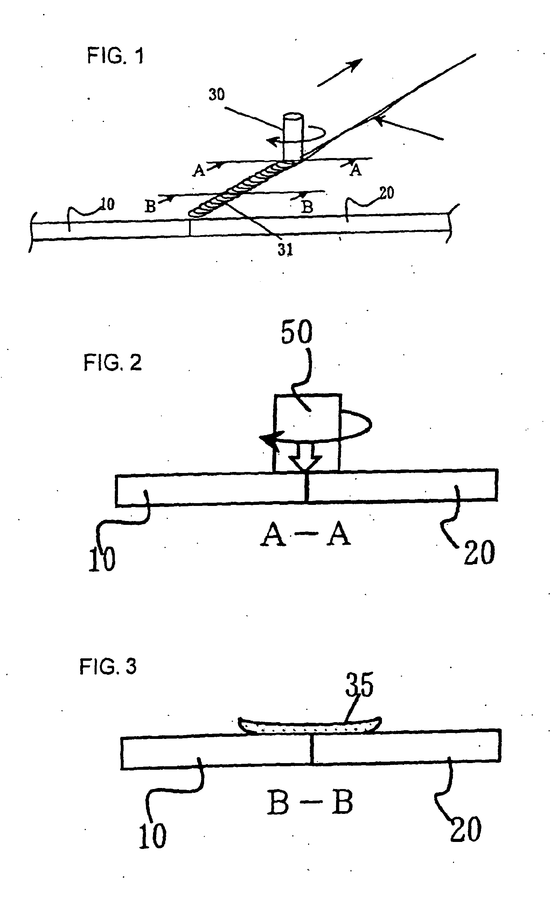

Now, the present invention will be described with reference to FIGS. 1 through 3. In FIG. 1, panels 10 and 20 are butted against each other. The material of the panels 10 and 20 is aluminum alloy. The back sides of the panels 10 and 20 are placed on a base (not shown).

In this state, at first, a buildup member 30 is pressed on the upper surface of the butted portion from above, and the buildup member is rotated and relatively moved along the butted portion. The buildup member 30 is a round bar which is made of aluminum alloy material similar to panels 10 and 20. Thereby, a buildup bead 35 is welded to the upper surface of the butted portion along with the movement of the buildup member 30.

By the buildup member 30 being transferred as the buildup bead 35, the buildupmember 30 becomes short, and at an appropriate timing, the rotation and movement of the buildup member is stopped, and the consumed buildup member is replaced with a new buildup member having a predetermined length.

The buildup bead 35 is welded onto the upper surface of the panel 10. The thickness of the buildup bead 35 is increased along with the rotation of the buildup member 30. The buildup bead 35 is welded onto the upper surface of the panels 10 and 20.

The thickness of the buildup bead 35 should approximately be 1 mm. Preferably, the bead should be thicker than 0.5 mm. The buildup bead 35 corresponds to the projection according to the prior art. The buildup bead not only corresponds to the prior art projection, but it contributes to reducing the gap, if any, between the panels 10 and 20 by entering the gap. Thus, defects are not likely to occur at the friction stir weld joint.

As described in patent document 1, if there is a gap between the butted surfaces of two members, a defect may be generated at the friction stir weld joint, but since according to the present invention, the metal material of the friction weld bead 35 provides the material for filling the gap, so the generation of defects at the joint caused by the gap can be suppressed. Furthermore, if there is no friction weld bead 35, a boundary portion 53 between a large-diameter portion of a rotary tool 50 and a center pin 51 disposed along a center axis thereof comes into contact directly with the panels 10 and 20, so that a recessed groove is formed by the boundary portion 53 to the panels 10 and 20, by which the thickness of the panels is substantially reduced, but since according to the present invention the boundary portion 53 contacts the friction weld bead, a recessed groove will not be generated to the panels, and the friction stir weld joint will have a superior appearance.

Moreover, since the friction stir weld bead 35 corresponding to the projection is formed after butting together the panels, rolled metal panels can be used instead of extruded shape members for the panels 10 and 20, so that friction stir welding can be applied more widely. Furthermore, since the friction weld bead 35 is formed to both panels 10 and 20 being butted against each other via friction welding, the weld bead 35 can be welded onto both panels by a single friction weld.

The buildup member 30 is pressed downward with predetermined pressure together with an electric motor for rotating the buildup member 30. Furthermore, the buildup member 30 and the electric motor are moved at predetermined speed with respect to the butted friction portion. A frictional heat occurs by the friction, and the metal of the friction member 30 is welded onto members 10 and 20. The amount of weld (thickness) is determined by the frictional heat.

The method for rotating and moving a buildup member 30 in the form of a round bar in contact with the surface of the metal of the counterpart member, and welding the metal of the metal bar to the counterpart metal panel by the contact heat caused by rotation is known, as disclosed in non-patent document 1.

The method for friction-welding a buildup member to a metal of the counterpart member so as to reform the surface thereof is disclosed in "Section 3: Friction Buildup" of Japan Welding Society Journal 2004 Vol. 6, p.36 - p.40 "Surface Reforming through application of Friction Stir Welding" (non-patent document 1).

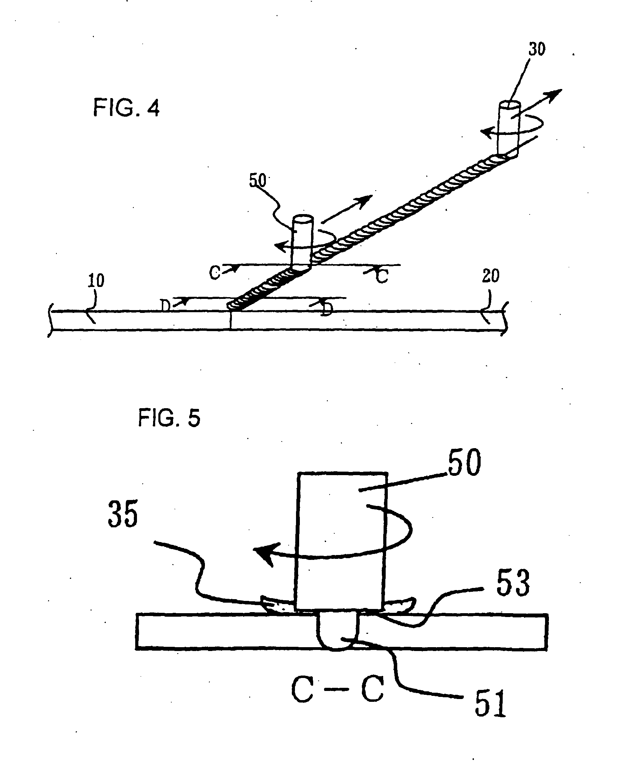

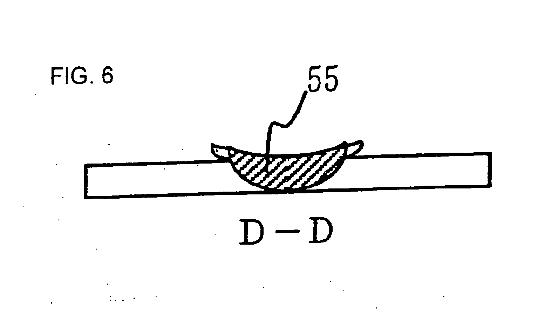

Next, as shown in FIGS. 4 through 6, a center pin 51 of the rotary tool 50 is inserted from the upper portion of the buildup bead 35 so as to join members 10 and 20 via friction stir welding. During friction stir welding, a bottom surface 53 of a large-diameter portion at the upper portion of the center pin 51 of the rotary tool is in contact with the buildup bead 35.

The outer diameter size of the buildup member 30 of FIG. 1 is 20 mm, and a weld bead 35 as illustrated in FIG. 3 having a width (width in the direction orthogonal to the direction of movement of the buildup member 30) somewhat greater (a few millimeters over 20 mm) than the diameter of the buildup member 30 is formed. The diameter of the large-diameter portion of the friction stir welding rotary tool 50 entering the buildup bead is 15 mm. According to the the present invention, since the diameter of the large-diameter portion is smaller than the width of the weld bead 35 corresponding to the projection of the prior art, the weld bead 35 corresponds to the projection.

Next, if necessary (such as when the upper surface is used as the outer face of a device, or when a smooth surface is required), a friction stir bead 55 is cut and removed from the surface of the members 10 and 20.

According to this embodiment, the buildup bead 35 corresponds to the projection of the prior art method, and thus, it contributes to reducing the occurrence of defects when friction stir welding members 10 and 20.

Since according to the prior art, a projection had to be formed to the members, so the members to be welded had to be formed via extrusion, but according to the present invention, a rolled panel can be used as the panels 10 and 20.

The remaining buildup bead is removed by cutting, but since the buildup bead is thin, the cutting thereof is easy.

When the bead 35 is welded using the buildup member 30, the thickness of the bead 35 is not constant when the buildup member 30 is positioned perpendicularly with respect to the members 10 and 20, but if the buildup member 30 is tilted when contacting the members 10 and 20, a bead 35 having a constant thickness 35 can be formed. The direction of tilt should be the same as the direction of tilt of the rotary tool 50. That is, the leading end of the buildup member 30 (the lower end in FIG. 1) is positioned frontward in the direction of movement than the opposite end (upper end) duringmovement (inotherwords, the opposite end is positioned rearward than the leading end). The tilting angle is approximately 2 degrees.

As illustrated in FIG. 3, the buildup member 30 is used to form the buildup bead 35, and thereafter, the rotary tool 50 is inserted rearward in the direction of movement of the buildup member 30 to perform friction stir welding and form a friction stir weld bead 55.

The positional relationship of the buildup member 30 and the rotary tool 50 may be set so that friction stir welding is performed before the buildup bead 35 is cooled down to room temperature. Of course, it is possible to perform friction stir welding after the buildup bead is cooled down to room temperature.

According to the above embodiment, the buildup member 30 is moved to weld the buildup bead 35, but it is possible to move the members 10 and 20 with respect to the buildup member 30.

Moreover, it is possible to move the rotary tool 50 with respect to the panels 10 and 20, or to move the panels 10 and 20 with respect to the rotary tool 50.

According to the present embodiment, the welding of the buildup member 30 and the friction stir welding are performed at the same time, but the two processes can be performed separately.

### [Example 1 (not being pent of the present invention)]

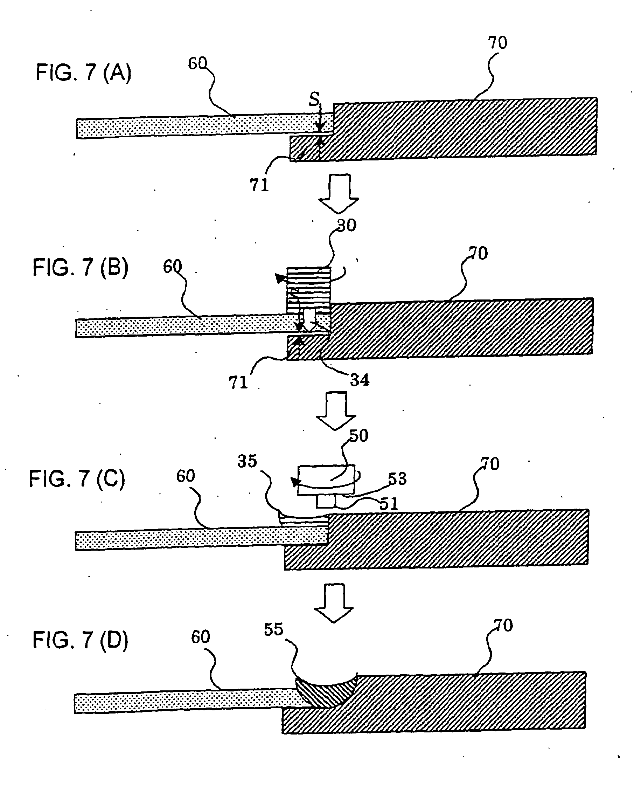

Example 1 (not being pent of the present invention) will now be described with reference to FIG. 7. Friction stir welding is carried out in the order of (A), (B), (C) and (D) of FIG. 7. Member 70 is an extruded shape member having a protruded block 71 for placing a member 60. The member 60 can also be an extruded shape member. The member 60 is placed on the protruded block 71 of the member 70, and thus the members 60 and 70 are butted against each other. The upper surface of the member 70 near the butted portion is higher than the upper surface of the member 60. The plate thickness of the member 60 is thinner than the plate thickness of the member 70. The member 70 is placed on a base (not shown).

After assembling the members as described above, at first, a buildup member 30 is used to bond a buildup bead 35 to the upper surface of the member 60. Thus, a buildup bead 35 is welded to the upper surface of the member 60. The buildup bead 35 is welded to the upper surface of the member 60 and the side end of the member 70 butted to the member 60. Since the buildup member 30 presses down the member 60 upon bonding the buildup bead 35, the space S between the protruded block 75 and the member 60 mounted thereon, if any, can be eliminated. Reference number 34 denotes a pressing force.

Next, the butted portion between the members 60 and 70 is friction stir welded via a rotary tool 50. Friction stir welding is performed with the bottom surface 53 of the large-diameter portion 52 of the rotary tool 50 inserted to the buildup bead 35. The rotational center of the rotary tool 50 is positioned at the butted portion between members 60 and 70. Since there is no space S formed between the bottom surface of the member 60 and the upper surface of the protruded block at this time, the two members can be welded well.

The portion of the friction stir bead 55 projected from the upper surfaces of the members 60 and 70 formed during friction stir welding is cut and removed.

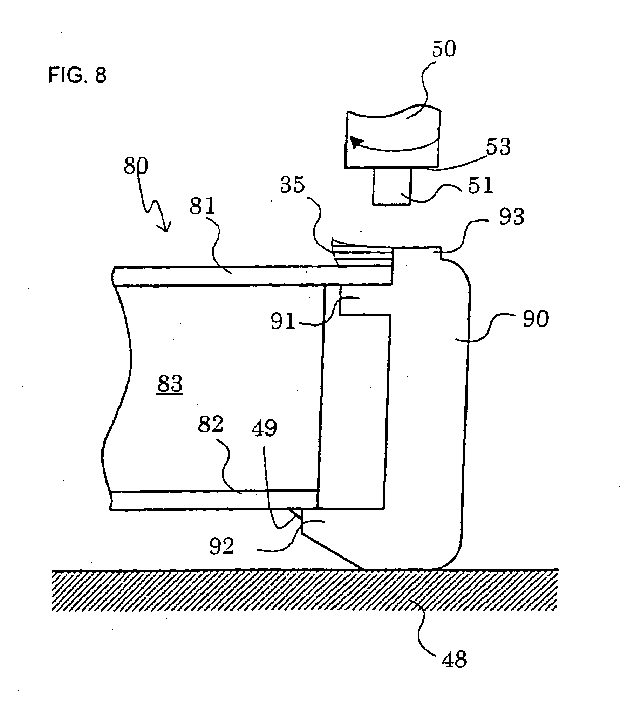

The above example describes that the members 60 and 70 are panel members, but they can be hollow shape members. This example (again not covered by the present invention as defined in the claims) is described with reference to FIG. 8. FIG. 8 illustrates an entrance of a railway car. Member 80 is a hollow shape member constituting a side frame forming the side wall of the railway car. Reference number 90 denotes a frame member for an entrance formed to the side frame. Member 90 is not technically hollow since it has an open side surface (in other words, the protruded blocks 91 and 92 are not welded, so there is no hollow portion), but here it is referred to as a hollow shape member. The direction of extrusion of the extruded member 80 is in the left-right direction of the drawing. The direction of extrusion of the member 90 is in the direction orthogonal to the sheet surface of FIG. 2.

The right end side in the direction of extrusion of an upper face plate 81 of the member 80 overlaps with the upper surface of the protruded block 91 of the member 90. The upper and lower face plates 81 and 82 are joined via connecting plates 83. The three members are formed integrally from extruded shape members. The right end portion in the direction of extrusion of the lower face plate 82 and the connecting plate 83 of the member 80 is retreated in the left direction than the right end of the upper face plate 81. The hollow shape member constituting member 80 is cut and processed in such manner.

The upper face plate 81 of the member 80 overlaps with the upper surface of the protruded block 91. The lower face plate 82 of the member 80 is placed on the protruded block 92 at the lower surface of the member 90 (the protruded block 92 and the face plate 82 are overlapped). A projection 93 is provided to protrude upward from the member 90 along the upper face plate 81. The upper surface of the projection 93 is positioned higher than the upper surface of the face plate 81.

The members 80 and 90 are assembled as illustrated in FIG. 8, and fillet welding 49 is performed to the protruded block 92 and the face plate 82.

Next, the members are placed on a base 48 with the face plate 81 and the projection 93 facing upward, and then a buildup bead 35 is welded to the face plate 81 using a buildup member 30.

Thereafter, the butted portion between the face plate 81 and the member 90 is subjected to friction stir welding using a rotary tool 50.

Then, after performing friction stir welding, the upper surface of the friction stir weld joint and the projection 93 are cut and removed from the face plate 81 (in other words, the portion of the buildup weld bead 35, the friction stir weld joint and the projection 93 placed above the upper surface of the face plate are removed).

In this manner, the present example (FIG. 8) is similar to the example (second embodiment) of FIG. 7.

The examples described above related to friction stir welding the butted portions between two butted members, but it can be applied not only to butt joints but to friction stir welding of the overlapped portions of two members (panels). That is, by welding a buildup bead onto the surface of the member on the upper side (the side from which the friction stir welding tool is inserted) and performing friction stir welding of the portion using the rotary tool, the bottom surface of the rotary tool will be inside the buildup bead during welding, so that the recessed groove formed by the bottom surface of the rotary tool coming into contact with the surface of the object member will be formed on the buildup bead, which will otherwise be formed on the obj ect member if there is no buildup bead, and such recessed groove can be removed easily by cutting off the remaining buildup bead after completing the friction stir welding.

## Claims

1. A friction stir welding method comprising
(i) butting a first member (10) against a second member (20) at an abutment region, said first and second members (10,20) having first surfaces facing in the same direction at said abutment region,
(ii) welding a buildup bead (35) to said first surface of at least one of said first and second members (10,20),
(iii) performing friction stir welding at said abutment region to join said first and second members (10,20) by inserting a rotary friction stir welding tool (50) into said buildup bead (35), said first member (10) and said second member (20) at said first surfaces,
**characterised in that**
in step (ii) said buildup bead (35) is formed by rotating a buildup member (30), which is cylindrical and has an outer diameter greater than an outer diameter of a large-diameter portion of the rotary friction stir welding tool (50), in contact with at least one of said first surfaces and relatively moving the buildup member (30) along the abutment region.

2. A method according to claim 1, wherein said first and second members (10, 20) have the same panel thickness at the abutment region and said first and second members (10,20) and said buildup members (30) are made of the same kind of material.

3. A method according to claim 1, wherein said buildup member (30) when rotated in contact with said first surface or surfaces is tilted so that its end contacting said first surface is in advance, in the relative direction of movement of the buildup member (30) along the abutment region, relative to its opposite end.

4. A method according to any one of claims 1 to 3, wherein
while welding the buildup bead (35) to said first surface by means of said buildup member (30), the friction stir welding is performed by means of the rotary tool (50) which is following the buildup member (30) at a rearward position in the relative direction of movement of the buildup member (30) along the abutment region.

## Patentansprüche

1. Reibrührschweißverfahren, aufweisend:
(i) Anlegen eines ersten Elements (10) an ein zweites Element (20) bei einem Stoßbereich, wobei das erste und das zweite Element (10, 20) erste Flächen aufweisen, die am Stoßbereich in die gleiche Richtung weisen,
(ii) Schweißen einer auftragenden Raupe (35) auf die erste Fläche des ersten und/oder zweiten Elements (10, 20),
(iii) Ausführen von Reibrührschweißen am Stoßbereich, um das erste und das zweite Element (10, 20) miteinander zu verbinden, indem ein sich drehendes Reibrührschweißwerkzeug (50) in die auftragende Raupe (35), das erste Element (10) und das zweite Element (20) an den ersten Flächen eingeführt wird,
**dadurch gekennzeichnet, dass**
die auftragende Raupe (35) in Schritt (ii) ausgebildet wird, indem in Kontakt mit mindestens einer der ersten Flächen ein auftragendes Element (30) gedreht wird, das zylindrisch ist und einen größeren Außendurchmesser als ein Abschnitt großen Durchmessers des sich drehenden Reibrührschweißwerkzeugs (50) aufweist, und das auftragende Element (30) entlang des Stoßbereichs einer Relativbewegung unterworfen wird.

2. Verfahren nach Anspruch 1, wobei das erste und das zweite Element (10, 20) am Stoßbereich die gleiche Plattendicke aufweisen und sowohl das erste und das zweite Element (10, 20) als auch das auftragende Element (30) aus der gleichen Materialsorte hergestellt sind.

3. Verfahren nach Anspruch 1, wobei das auftragende Element (30) bei Drehung in Kontakt mit der ersten Fläche bzw. den ersten Flächen so gekippt wird, dass sein die erste Fläche berührendes Ende in Bezug zu seinem gegenüberliegenden Ende in der Richtung der Relativbewegung des auftragenden Elements (30) entlang des Stoßbereichs voranläuft.

4. Verfahren nach einem der Ansprüche 1 bis 3, wobei beim Schweißen der auftragenden Raupe (35) auf die erste Fläche mittels des auftragenden Elements (30) ein Reibrührschweißen unter Verwendung des sich drehenden Werkzeugs (50) ausgeführt wird, das dem auftragenden Element (30) bezüglich der Richtung der Relativbewegung des auftragenden Elements (30) entlang des Stoßbereichs nachfolgt.

## Revendications

1. Procédé de soudage par friction-malaxage comportant les étapes consistant à
(i) abouter un premier élément (10) contre un second élément (20) dans une zone d'aboutement, lesdits premier et second éléments (10, 20) ayant des premières surfaces dirigées dans la même direction sur ladite zone d'aboutement,
(ii) souder un cordon de recharge (35) sur ladite première surface d'au moins un desdits premier et second éléments (10, 20),
(iii) réaliser un soudage par friction-malaxage sur ladite zone d'aboutement afin de réunir lesdits premier et second éléments (10, 20) en insérant un outil rotatif de soudage par friction-malaxage (50) dans ledit cordon de recharge (35), ledit premier élément (10) et ledit second élément (20) sur lesdites premières surfaces,
**caractérisé en ce que**
à l'étape (ii), ledit cordon de recharge (35) est formé en mettant en rotation un élément de recharge (30) qui est cylindrique et a un diamètre extérieur plus grand qu'un diamètre extérieur d'une partie à grand diamètre de l'outil rotatif de soudage par friction-malaxage (50), en contact avec au moins une desdites premières surfaces et en déplaçant de manière relative l'élément de recharge (30) le long de la zone d'aboutement.

2. Procédé selon la revendication 1, dans lequel lesdits premier et second éléments (10, 20) ont la même épaisseur de panneau sur la zone d'aboutement et lesdits premier et second éléments (10, 20) et ledit élément de recharge (30) sont constitués du même type de matériau.

3. Procédé selon la revendication 1, dans lequel ledit élément de recharge (30), lorsqu'il est mis en rotation pour entrer en contact avec ladite première surface ou lesdites premières surfaces, est incliné de telle sorte que son extrémité en contact avec ladite première surface est en avance, dans la direction relative de déplacement de l'élément de recharge (30) le long de la zone d'aboutement, par rapport à son extrémité opposée.

4. Procédé selon l'une quelconque des revendications 1 à 3, dans lequel lors du soudage du cordon de recharge (35) sur ladite première surface au moyen dudit élément de recharge (30), le soudage par friction-malaxage est réalisé au moyen de l'outil rotatif (50) qui suit l'élément de recharge (30) sur une position en arrière dans la direction relative de déplacement de l'élément de recharge (30) le long de la zone d'aboutement.
